# EUROPEAN PATENT SPECIFICATION

(11) **EP 1 529 430 B1**
(45) Date of publication and mention of the grant of the patent: **28.07.2010**
(21) Application number: 04105540.1
(22) Date of filing: 05.11.2004
(51) Int. Cl.: A01B 73/02, A01B 23/04

(54) **Device at a soil tillage implement**
Bodenbearbeitungsgerät
Machine pour le travail du sol

(30) Priority: 06.11.2003 SE 0302950
(43) Date of publication of application: 11.05.2005
(73) Proprietor: Väderstad-Verken AB, 590 21 Väderstad (SE)
(72) Inventor: Dahl, Jörgen, 599 91, Ödeshög (SE); Karlsson, Bo, 585 97, Linköping (SE); Stark, Magnus, 587 27, Linköping (SE)
(74) Representative: Stein, Jan Anders Lennart

(56) References cited:
- EP-A- 0 334 880
- EP-A- 1 332 655
- US-A- 2 954 087
- US-A- 3 219 127
- US-A- 4 821 809
- US-A- 5 622 229

## Description

### Summary of the invention

The aim of the invention is solved by a soil tillage implement according to Claim 1. Hereby is used a device with the same conversion principle as that described in EP 334 880 with its advantages. By folding aside or folding down one or more soil cultivating entities the transport height is reduced. This can be achieved in a constructionally advantageous way since the soil cultivating entities in the transport position are comprised of essentially horizontal elongated entities.

Claims 2-6 describe advantageous embodiments one comprising a parallelogram-like turning aside that can advantageously be used on a straw harrow arranged at the extreme front in the working position of the implement.

The further characteristics and advantages of the invention are described in more detail below with the aid of an embodiment example and drawings relating thereto.

### Drawing summary

Figure 1 shows a soil tillage implement according to the invention in a working position.
Figure 2 shows the soil tillage implement in a transport position.
Figure 3 shows a straw harrow part of the soil tillage implement the working position.
Figure 4 shows the straw harrow in the transport position.

### Detailed description of an embodiment

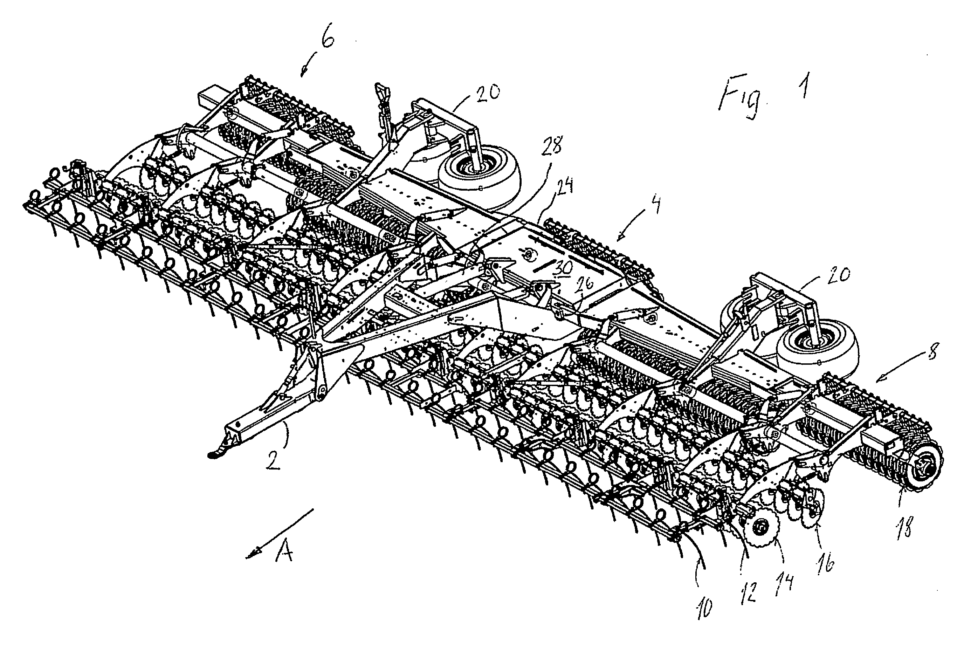

Figure 1 shows a soil tillage implement comprising a towing device 2, a central section 4 and two outer sections 6, 8, often referred to as wings or wing sections. The towing device 2 is adapted to be connected to a not shown vehicle, usually a tractor, and the direction of work is marked with A in Figure 1.

### Summary of the invention

The aim of the invention is solved by a device according to Claim 1. Hereby is used a device with the same conversion principle as that described in EP 334 880 with its advantages. By folding aside or folding down one or more soil cultivating entities the transport height is reduced. This can be achieved in a constructionally advantageous way since the soil cultivating entities in the transport position are comprised of essentially horizontal elongated entities.

Claims 2-6 describe advantageous embodiments one comprising a parallelogram-like turning aside that can advantageously be used on a straw harrow arranged at the extreme front in the working position of the implement.

The further characteristics and advantages of the invention are described in more detail below with the aid of an embodiment example and drawings relating thereto.

### Drawing summary

Figure 1 shows a soil tillage implement according to the invention in a working position.

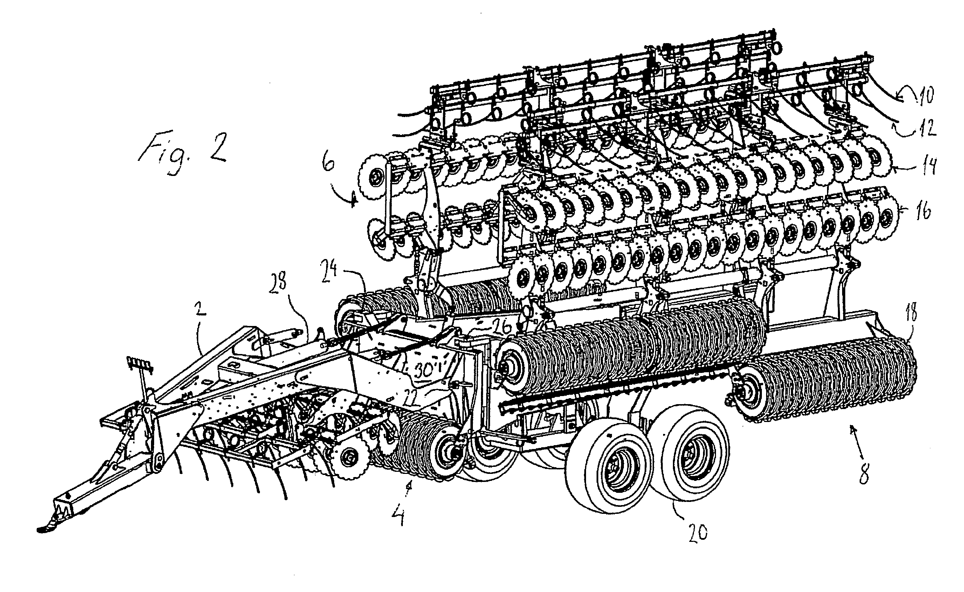

Figure 2 shows the soil tillage implement in a transport position.

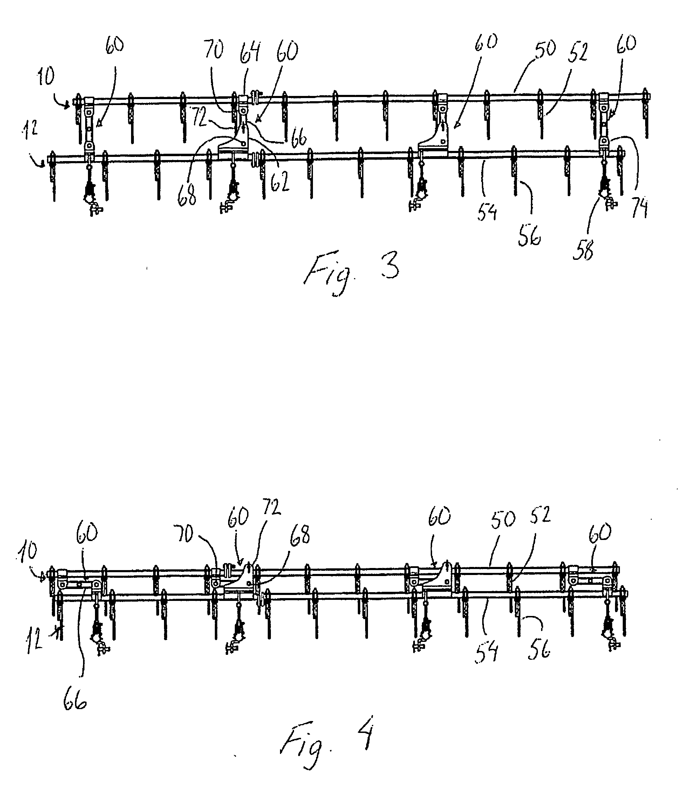

Figure 3 shows a straw harrow part of the soil tillage implement the working position.
Figure 4 shows the straw harrow in the transport position.

### Detailed description of an embodiment

Figure 1 shows a soil tillage implement comprising a towing device 2, a central section 4 and two outer sections 6, 8, often referred to as wings or wing sections. The towing device 2 is adapted to be connected to a not shown vehicle, usually a tractor, and the direction of work is marked with A in Figure 1.

The central section 4 comprises a carrying entity 30 turnably journalled in bearings at the towing device 2 around an essentially horizontal axle 22 (see Fig. 2). The outer sections 6, 8 are arranged on either side of the central section 4. The right outer section 6 is turnably journalled in bearings at the central section 4 around an axle 24 essentially horizontal in the working position, while the left outer section 8 is similarly journalled in bearings around an axle 26.

The three sections 4, 6, 8 comprise soil cultivating entities in the form of a fore straw harrow entity 10, a rear straw harrow entity 12, a fore disc entity 14, a rear disc entity 16 and a roller package 18. All soil cultivating entities 10, 12, 14, 16 are accordingly comprised here of elongated entities with a plurality of tools essentially across the direction of work A of the implement. Both the outer sections 6, 8 additionally each comprise a transport wheel entity 20

Conversion from the working position shown in Figure 1 to the transport position shown in Figure 2 is begun by first in the known way raising the tools of the soil cultivating entities 10, 12, 14, 16 out of the soil. Thereafter the straw harrow entities 10, 12 are converted from the working position in Figure 3 to the transport position in Figure 4.

Figure 3 shows the fore and rear straw harrow entities 10, 12 of the left outer section. These each comprise an essentially elongated cross horizontal beam 50, 54 at which a plurality of harrow tines 52, 56 are affixed. The rear beam 54 is fastened to the rest of the outer section with the fastening member 58.

Both the straw harrow entities 10, 12 are moveably journalled in bearings at each other with a number, here four, of turning members 60, 61. Both the central turning members 60 comprise a link arm 66 one end of which is fastened around a turnable axle 68 at a fastening console 62 fixed at the beam 54 of the rear straw harrow entity 12. The other end of the link arm 66 is fastened at a turnable axle 70 at a fastening console 64 fixed at the beam 50 of the fore straw harrow entity 10. Relative movement between the straw harrow entities is prevented through a locking member 72 in the form of a pin that runs through the fastening console 62 and the link arm 66 and thereby locks the link arm 66. Figure 3 also shows that both outer turning members 61 differ somewhat from the inner through a simpler fastening console at the rear beam 54 and the absence of a locking member.

Conversion from working position to the transport position in Figure 4 is achieved by releasing the locking pins 72 and thereafter turning the link arms 66 essentially 90 degrees anti-clockwise according to Figure 3 until the straw harrow entities 10, 12 achieve their relative placing according to Figure 4. Thereafter the locking pins 72 are replaced, now in position in front of the fore beam 50 which prevents any great relative movement between the beams 50, 54.

The soil tillage implement is then converted to the transport position shown in Figure 2 in a way essentially described in full in EP 334 880. In brief, the transformation is achieved by extending the hydraulic cylinders 28 and thereby turning the carrying entity 30 of the central section 4 essentially through 90 degrees. Hereby, the outer sections 6, 8 are also turned up 90 degrees so that they rest on the transport wheel entities 20. From this intermediate position the tractor is then driven forward, wherein the transport wheels 20 guide the outer sections 6, 8 into the transport position in Figure 2. The outer sections 6, 8 are accordingly turned around axles 24, 26 which in the transport position are essentially vertical.

Through the parallelogram-like displacement of the fore straw harrow entity 10, it is shown in Figure 2 that a lower transport height is achieved. The turning axles 68, 70 shown in Figures 3 and 4 are essentially horizontal in the transport position shown in Figure 2.

The invention can be varied in a plurality of ways within the frame of the patent claims. For example, the soil cultivating entities can be replaced by others or have another internal order. It is not necessarily just a straw harrow that is turned aside. It is also conceivable to allow several entities to be moveable between working position and transport position. The movement can also be achieved in other ways, for example with the help of hydraulic cylinders. Furthermore, the movement does not necessarily need to be parallelogram-like, the entity can also be turned inwards and downwards in the transport position. The turning movement can also be replaced by a displacement movement, for example telescopic. The embodiment described in detail is preferred since it provides a functionally secure and cost effective solution.

According to another alternative solution the central section can be turned in other directions. In such a solution, the rear soil cultivating entity becomes the highest in the transport position and the one that has to be turned aside.

## Claims

1. A soil tillage implement comprising a towing device (2), a central section (4) turnably journalled in bearings at the towing device (2) around an essentially horizontal axle (22), which central section (4) is arranged to be turned essentially 90 degrees between a working position and a transport position, at least one outer section (6, 8) turnably journalled in bearings at the central section (4) around an axle essentially horizontal in working position (24, 26), which axle (24, 26) in the transport position is essentially vertical, which outer section (6, 8) comprises a plurality of soil cultivating entities (10, 12, 14, 16), ***characterised in that*** at least one of said soil cultivating entities (10) is movable between a working position and a transport position, in which the at least one (10) of said soil cultivating entities (10 12 14 16) is displaced towards an adjacent (12) one of said soil cultivating entities, and journalled in bearings at the outer section (6, 8).

2. An implement according to Claim 1, wherein said soil cultivating entity (10) is turnably journalled in bearings at the outer section (6, 8), with at least two turning members (60, 61) comprising a first turning joint (68) essentially horizontal in transport position on the outer section (6, 8), a second turning joint (70) essentially horizontal in transport position on the soil cultivating entity (10), and a link arm (66) connected to the turning joints.

3. An implement according to Claim 2, wherein a locking member (72) is adapted to lock at least one of said turning members (60) in the working position.

4. An implement according to any one of the previous claims, wherein said spoil cultivating entity (10) is in the working position arranged at the extreme front of the outer section (6, 8).

5. An implement according to any one of the previous claims, wherein two outer sections (6, 8) are journalled in bearings at the central section (4), one on each side of the central section (4).

6. An implement according to any one of the previous claims, wherein said soil cultivating entity (10) is comprised of a straw harrow entity comprising a beam (50) essentially horizontal across in the working position with a plurality of thereto affixed harrow tines (52).

## Patentansprüche

1. Bodenbearbeitungsgerät umfassend eine Schleppeinrichtung (2), einen Zentralbereich (4), der drehbar in Lagern der Schleppeinrichtung (2) um eine im Wesentlichen horizontale Achse (22) gestützt ist, wobei der Zentralbereich (4) so angeordnet ist, dass er im Wesentlichen um 90 Grad zwischen einer Arbeitsposition und einer Transportposition gedreht wird, zumindest einen äußeren Bereich (6, 8) der in Lagern des Zentralbereichs (4) drehbar um eine Achse (24, 26) gestützt ist, die in der Arbeitsposition im Wesentlichen horizontal ist, wobei die Achse (24, 26) in der Transportposition im Wesentlichen vertikal ist, wobei der äußere Bereich (6, 8) eine Vielzahl von Bodenbestelleinheiten (10, 12, 14, 16) aufweist
**dadurch gekennzeichnet, dass**
zumindest Eine der Bodenbestelleinheiten (10) zwischen einer Arbeitsposition und einer Transportposition bewegbar ist, wobei die zumindest Eine (10) der Bodenbestelleinheiten (10, 12, 14, 16) gegen eine Benachbarte (12) der Bodenbestelleinheiten versetzt ist, und in Lagern an dem äußeren Bereich (6, 8) gestützt ist.

2. Gerät nach Anspruch 1, bei dem die Bodenbestelleinheit (10) drehbar in Lagern an dem äußeren Bereich (6, 8) gestützt ist, mit zumindest zwei Drehelementen (60, 61) umfassend ein erstes Drehgelenk (68) im Wesentlichen horizontal in der Transportposition an dem äußeren Bereich (6, 8), ein zweites Drehgelenk (70) im Wesentlichen horizontal in der Transportposition an der Bodenbestelleinheit (10), und einen Verbindungsarm (66), der mit den zwei Drehgelenken verbunden ist.

3. Gerät nach Anspruch 1, bei dem ein Sperrelement so eingerichtet ist, dass es zumindest eines der Drehelemente (60) in der Arbeitsposition sperrt.

4. Gerät nach einem der vorhergehenden Ansprüche, bei dem die Bodenbestelleinheit (10) in der Arbeitsposition an der äußersten Front des äußeren Bereichs (6, 8) angeordnet ist.

5. Gerät nach einem der vorhergehenden Ansprüche, bei dem zwei äußere Bereiche (6, 8) in Lagern an dem Zentralbereich gestützt sind, eines an jeder Seite des Zentralbereichs (4).

6. Gerät nach einem der vorhergehenden Ansprüche, bei dem die Bodenbestelleinheit (10) eine Stroheggeeinheit umfasst, umfassend einen Ausleger (50), der im Wesentlichen horizontal quer in der Arbeitsposition ist, mit einer Vielzahl von an diesem befestigten Eggzacken (52).

## Revendications

1. Instrument de travail du sol comprenant un dispositif de remorquage (2), une section centrale (4) tourillonnée de manière rotative dans des paliers au niveau du dispositif de remorquage (2) autour d'un essieu (22) essentiellement horizontal, laquelle section centrale (4) est agencée pour être pivotée essentiellement à 90 degrés entre une position de travail et une position de transport, au moins une section externe (6, 8) tourillonnée de manière rotative dans des paliers au niveau de la section centrale (4) autour d'un essieu essentiellement horizontal en position de travail (24, 26), lequel essieu (24, 26) dans la position de travail est essentiellement vertical, laquelle section externe (6, 8) comprend une pluralité d'entités de culture de sol (10, 12, 14, 16), **caractérisé en ce qu'**au moins l'une desdites entités de culture de sol (10) est mobile entre une position de travail et une position de transport, dans laquelle au moins l'une (10) desdites entités de culture de sol (10, 12, 14, 16) est déplacée vers une entité (12) adjacente desdites entités de culture de sol, et tourillonnée dans des paliers au niveau de la section externe (6, 8).

2. Instrument selon la revendication 1, dans lequel ladite entité de culture de sol (10) est tourillonnée de manière rotative dans des paliers au niveau de la section externe (6, 8), avec au moins deux éléments rotatifs (60, 61) comprenant un premier joint rotatif (68) essentiellement horizontal en position de transport sur la section externe (6, 8), un second joint rotatif (70) essentiellement horizontal en position de transport sur l'entité de culture de sol (10), et un bras de liaison (66) raccordé aux joints rotatifs.

3. Instrument selon la revendication 2, dans lequel un élément de blocage (72) est adapté pour bloquer au moins l'un desdits éléments rotatifs (60) dans la position de travail.

4. Instrument selon l'une quelconque des revendications précédentes, dans lequel ladite entité de culture de sol (10) est, dans la position de travail, agencée au niveau de la partie avant extrême de la section externe (6, 8).

5. Instrument selon l'une quelconque des revendications précédentes, dans lequel deux sections externes (6, 8) sont tourillonnées dans des paliers au niveau de la section centrale (4), l'une de chaque côté de la section centrale (4).

6. Instrument selon l'une quelconque des revendications précédentes, dans lequel ladite entité de culture de sol (10) est composée d'une entité de herse pour la paille comprenant une poutre (50) essentiellement horizontale dans la position de travail avec une pluralité de dents de herse (52) fixées à celle-ci.
